# FASCICULE DE BREVET EUROPEEN

(11) **EP 2 731 807 B1**
(45) Date de publication et mention de la délivrance du brevet: **19.08.2015**
(21) Numéro de dépôt: 12731410.2
(22) Date de dépôt: 27.06.2012
(51) Int. Cl.: B60C 3/08

(54) **PNEUMATIQUE PLIABLE, PROCEDE DE PLIAGE ET UTILISATION**
ZUSAMMENKLAPPBARER REIFEN, VERFAHREN ZUM ZUSAMMENKLAPPEN UND VERWENDUNG
COLLAPSIBLE TIRE, METHOD FOR COLLAPSING SAME, AND USE THEREOF

(30) Priorité: 13.07.2011 FR 1156414
(43) Date de publication de la demande: 21.05.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BESTGEN, Luc, F-63040 Clermont-Ferrand Cedex 9 (FR); AHOUANTO, Michel, F-63040 Clermont-Ferrand Cedex 9 (FR)
(74) Mandataire: Bauvir, Jacques
(86) Numéro de dépôt international: PCT/EP2012/062493
(87) Numéro de publication internationale: WO 2013/007524

(56) Documents cités:
- US-A- 3 540 510

## Description

L'invention concerne un pneumatique pliable, à carcasse radiale ou à carcasse croisée, un procédé de pliage et une utilisation pour véhicule de tourisme.

Dans ce qui suit, on désigne par :
- « plan circonférentiel» : un plan perpendiculaire à l'axe de rotation du pneumatique,
- « plan équatorial » : un plan circonférentiel passant par le milieu de la surface de roulement du pneumatique et,
- « plan radial » : un plan qui contient l'axe de rotation du pneumatique,
- « direction axiale » : direction parallèle à l'axe de rotation du pneumatique,
- « direction radiale » : une direction coupant l'axe de rotation du pneumatique et perpendiculaire à celui-ci,
- « direction circonférentielle » : une direction tangente à la surface de la bande de roulement selon le sens de rotation du pneumatique,
- « radialement intérieur à » : plus proche de l'axe de rotation du pneumatique,
- « radialement extérieur à »: plus éloigné de l'axe de rotation du pneumatique.
- « axialement intérieur à » : plus proche du plan équatorial,
- « axialement extérieur à » : plus éloigné du plan équatorial.

Un pneumatique comprend une bande de roulement destinée à venir en contact avec le sol par l'intermédiaire d'une surface de roulement, se prolongeant radialement vers l'intérieur par deux flancs reliés à deux bourrelets destinés à assurer la liaison du pneumatique avec une jante.

Un pneumatique radial comprend plus particulièrement une armature de renforcement comprenant une armature de sommet, radialement intérieure à la bande de roulement, et une armature de carcasse radiale, radialement à l'intérieur de l'armature de sommet.

Le pneumatique à carcasse croisée se distingue d'un pneumatique de technologie radiale par la présence d'au moins deux nappes carcasse croisées dont l'angle est différent de 90° par rapport à la direction circonférentielle du pneumatique. Les nappes sont dites « croisées » parce que les angles sont de signes opposés d'une nappe à l'autre.

L'armature de carcasse comprend habituellement au moins une couche d'éléments de renforcement constitué de fils sensiblement parallèles entre eux et faisant habituellement, avec la direction circonférentielle un angle compris entre 85° et 95°. L'armature de carcasse s'enroule dans la plupart des pneumatiques dans chaque bourrelet de l'intérieur vers l'extérieur du pneumatique, autour d'un élément de renforcement circonférentiel, appelé tringle, pour former un retournement. La tringle peut être formée d'un assemblage de fils élémentaires ou de câbles, eux-mêmes formés d'un assemblage de fils élémentaires.

L'armature de sommet comprend généralement plusieurs couches d'armature de sommet. Ces couches sont le plus souvent constituées d'éléments de renforcement métalliques noyés dans un matériau élastomérique.

Dans le cas d'un pneumatique pour véhicule de tourisme, l'épaisseur de l'armature de sommet, constituée essentiellement par l'empilage radial de l'armature de sommet et de l'armature de carcasse est habituellement comprise entre 2 et 7 mm. Un flanc de pneumatique pour véhicule de tourisme a généralement une épaisseur comprise entre 2,6 et 7 mm.

Il est déjà connu du document WO10/100088 un pneumatique pliable pour bicyclette comprenant une armature de carcasse dont chaque extrémité est ancrée dans deux bourrelets par retournement autour d'un élément de renfort, appelé tringle. Chaque bourrelet est prolongé radialement par des flancs rejoignant une bande de roulement. Ce pneumatique comprend une tringle formée par enroulement d'un câble métallique saturé et non fretté, formé de filaments.

Il est par ailleurs connu du document FR2,348,065 un pneumatique pliable, monté sur jante, pour des véhicules, tels que des automobiles. Ce pneumatique comporte une bande de roulement sensiblement annulaire située centralement, et des flancs prolongeant la bande de roulement et se terminant par des bourrelets inextensibles, c'est-à-dire dont la tringle a une rigidité circonférentielle élevée. Lorsque le pneumatique est dégonflé, les flancs peuvent être pliés vers l'intérieur l'un vers l'autre de manière à être pratiquement aplatis à l'intérieur du pneumatique par rapport à la bande de roulement.

Enfin, le document US4,057,091 divulgue encore le pliage d'un pneumatique pour véhicule automobile lorsqu'il est monté sur une jante. Dans une telle combinaison, et lorsqu'il est dégonflé, le pneumatique peut être aplati par repliement interne de ses flancs sur eux-mêmes vers cette jante.

Mais de telles configurations de pliage de pneumatique pour véhicule automobile tiennent compte de la présence permanente de la jante, et conservent malgré tout un encombrement important, et un poids élevé du fait de la présence de la jante.

Par ailleurs, lorsque les pneumatiques sont fabriqués sur des lieux de productions éloignés des lieux de vente, il est nécessaire de les transporter. Lors de leur transport, même s'ils sont comprimés ensemble, les pneumatiques occupent encore un volume important.

En effet, un mode de conditionnement utilisé actuellement consiste tout d'abord à disposer verticalement et linéairement une première rangée de pneumatiques formant un angle d'inclinaison avec le sol de manière à les superposer partiellement. D'autres pneumatiques sont ensuite incorporés et enfoncés dans la partie de l'orifice laissée libre de chaque pneumatique de la première rangée, formant ainsi une seconde rangée. Un tel mode de conditionnement permet d'ajouter 30% de pneumatique par m³ en plus par rapport à un rangement dans lequel les pneumatiques sont disposés côte à côte sans déformation.

Aussi il subsiste le besoin de pouvoir conditionner un ou plusieurs pneumatiques pour véhicule automobile, non montés sur jante, de manière plus ou moins compacte, le temps de leur transport et/ou de leur stockage, sans endommager leur structure interne, tout en leur permettant de retrouver très rapidement leur forme initiale après dépliage.

L'invention a donc pour objet un pneumatique pliable pour véhicule comportant au moins une armature de carcasse associée à une armature de sommet inextensible, elle-même radialement à l'intérieur d'une bande de roulement, lesdites armatures étant chacune constituées d'au moins une couche d'éléments de renforcement, ladite bande de roulement étant reliée à deux bourrelets par l'intermédiaire de deux flancs, lesdits bourrelets étant destinés à entrer en contact avec une jante, chaque bourrelet comportant au moins un élément de renforcement circonférentiel inextensible, appelé tringle, ladite tringle définissant, à un état libre de toute contrainte, une ligne moyenne formant une courbe fermée sensiblement circulaire dans un plan circonférentiel, lesdits flancs présentant une épaisseur comprise entre 2,6 et 7 mm et ladite armature de sommet présentant une épaisseur comprise entre 2 et 7 mm. L'invention se caractérise en ce que la tringle de chaque bourrelet est flexible, et en ce qu'après pliage du pneumatique, la ligne moyenne de la tringle comprend au moins une partie concave P_{c} de plus petit rayon R_{c} et de centre de courbure C_{c}.

L'objet de l'invention concerne à la fois les pneumatiques comprenant une armature de sommet radialement à l'intérieur de l'armature de carcasse, et les pneumatiques comprenant une armature de sommet radialement à l'extérieur de l'armature de carcasse.

Une tringle est dite flexible lorsque, fléchie dans son plan autour d'une poulie de rayon 10mm, aucun des éléments rigides la constituant n'atteint une déformation permanente.

Selon l'invention, une armature de sommet est inextensible lorsque l'effort, pour la déformer de 5%, est au moins égal à 40N, et une tringle est inextensible lorsque l'effort, pour l'allonger de 1%, est au moins égal à 2500N.

La partie concave est définie par un centre de courbure à l'extérieur de la ligne moyenne fermée de la tringle. La partie convexe est définie par un centre de courbure à l'intérieur de la ligne moyenne fermée de la tringle.

Le pneumatique selon l'invention présente l'avantage de pouvoir augmenter de manière significative le nombre de pneumatiques par unité de volume lors du transport et/ou du stockage, entraînant ainsi un gain économique important.

En effet, le mode de pliage selon l'invention permet un stockage de pneumatique avec un gain de 50% par m³ par rapport notamment au mode de conditionnement de type chaînage, explicité précédemment. Le pneumatique selon l'invention peut être plié, et stocké en vrac ou disposé dans une boîte.

Un autre avantage du pneumatique de l'invention est qu'il peut être soumis et conservé sous différents modes de pliage, quelque soit sa taille: Enfin, le pneumatique selon l'invention peut rester plié le temps de son transport et/ou de son stockage sans aucun impact négatif sur ses performances.

Un autre objet de l'invention est un premier procédé pour plier un pneumatique tel que défini précédemment, qui consiste à :
- écarter, dans un plan radial, les bourrelets d'une partie du pneumatique selon une direction axiale vers un axe tangent au centre de la bande de roulement de ladite partie du pneumatique dans ledit plan radial,
- à appliquer une force selon une direction radiale sur ladite bande de roulement de manière à la rapprocher de la cavité opposée formant ainsi, dans un plan circonférentiel, un pneumatique plié sensiblement en forme d'arc de cercle comprenant une base reliée à deux axes.

Par l'étape d'écartement, on considère une augmentation de la distance axiale entre les bourrelets.

L'invention a encore pour objet un second procédé pour plier un pneumatique tel que défini ci-dessus qui consiste à :
- écarter, dans un plan radial, les bourrelets d'une première partie du pneumatique selon une direction axiale vers un axe tangent au centre de la bande de roulement, et à appliquer une force de compression selon la direction radiale sur ladite bande de roulement, ladite force pouvant être appliquée simultanément et/ou après l'écartement des bourrelets,
- à appliquer une première force F₁ selon une première direction circonférentielle sur ladite bande de roulement de manière à rapprocher la cavité correspondante d'une autre partie de cavité du pneumatique,
- à écarter, dans un plan radial, les bourrelets d'une seconde partie du pneumatique selon une direction axiale vers un axe tangent au centre de la bande de roulement,
- à appliquer, de manière simultanée ou non, la force de compression selon la direction radiale sur ladite première et/ou seconde partie, et une seconde force F₂ selon une seconde direction circonférentielle, de sens opposé à ladite première force F₁ sur ladite bande de roulement de manière à rapprocher la cavité correspondante d'une autre partie de cavité du pneumatique.

Enfin, l'invention a pour dernier objet une utilisation du pneumatique tel que défini précédemment pour véhicule de tourisme.

La ligne moyenne de la tringle comprend en outre au moins deux points d'inflexion I₁, I₂ délimitant la partie concave P_{c}.

La ligne moyenne de la tringle comprend en outre au moins deux parties convexes Pₓ₁, Pₓ₂ ayant deux plus petits rayons Rₓ₁, Rₓ₂ et deux centres de courbure Cₓ₁, Cₓ₂. De préférence, des droites D₁, D₂ reliant respectivement le centre de courbure C_{c1} de la partie concave P_{c} à chacun des centres de courbures Cₓ₁, Cₓ₂ des parties convexes forment un angle α compris entre 30 et 125°.

La ligne moyenne de la tringle de chaque bourrelet est de préférence formée par enroulement d'un câble métallique, formé de filaments. Le diamètre du câble est de préférence inférieur à 1,5mm, est saturé et non fretté. Le diamètre des filaments est de préférence inférieur à 0,25mm.

Un câble est dit « saturé » dès lors qu'il est impossible d'ajouter un filament supplémentaire entre les filaments formant ledit câble. Il est dit «non fretté» lorsque qu'il ne comporte pas un filament supplémentaire enroulé en hélice sur la surface externe dudit câble. Un filament de frette est usuellement choisi avec un diamètre inférieur à celui des filaments du câble et est enroulé selon un pas réduit et dans un sens opposé ou identique à celui de l'enroulement des fils formant la surface externe du câble. La fonction première d'une frette est de limiter le flambage du câble.

De préférence également, le diamètre des fils ou filaments formant le câble est inférieur à 0.20 mm. De tels diamètres des filaments vont encore contribués à la souplesse du câble et limiter les efforts nécessaires pour plier le pneumatique.

Un mode de réalisation avantageux de l'invention prévoit que le module en traction du câble est supérieur à 150 GPa.

Avantageusement encore, le câble est pliable selon un rayon de courbure compris entre 2 et 5 mm sans présenter de déformation qui rendrait le pneumatique non utilisable. De préférence, il est pliable selon un rayon de courbure inférieur à 3 mm sans présenter de déformation qui rendrait le pneumatique non utilisable.

Selon une variante de réalisation de l'invention, le câble est un câble métallique à couches de construction [L+M] ou [L+M+N] comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20.

Lorsque L est égal à 1, la première couche forme une âme centrale constituée d'un fil métallique de diamètre d₁.

Avantageusement selon cette variante de réalisation, le pas p₂ et le pas p₃ sont identiques.

Avantageusement encore selon cette variante de réalisation, le câble est un câble métallique 19.18 de formule 1+6+12, les couches étant formées avec le même sens de rotation et avec des pas identiques égaux à 10 mm. Un tel câble autorise la formation d'une tringle par un enroulement de 3 à 16 tours. Le nombre de tours nécessaires est fonction de la dimension du pneumatique et de son usage.

Selon une première variante, après le pliage du pneumatique, la ligne moyenne de la tringle comprend une partie concave P_{c} de plus petit rayon R_{c1} et de centre de courbure C_{c1}. La tringle comprend également deux parties convexes Pₓ₁, Pₓ₂, respectivement de plus petits rayons Rₓ₁, Rₓ₂, et de centres de courbures Cₓ₁, C_{x2.} Les droites D₁, D₂ reliant respectivement le centre de courbure C_{c1} de la partie concave P_{c} à chacun des centres de courbures Cₓ₁, Cₓ₂, de la partie convexe Pₓ forment un angle α compris entre 40 et 140°. La forme géométrique du pneumatique plié selon cette première variante ressemble sensiblement à une forme en « U » ou en « J » selon que les droites D₁ et D₂ sont de même longueur ou de longueur différente.

Selon une seconde variante, de préférence, après le pliage du pneumatique, la ligne moyenne de la tringle comprend une partie concave P_{c} de plus petit rayon R_{c1} et de centre de courbure C_{c1}. La tringle comprend deux parties convexes Pₓ₁, Pₓ₂, respectivement de plus petits rayons Rₓ₁, Rₓ₂, et de centres de courbures Cₓ₁, Cₓ₂. Les droites D₁, D₂ reliant respectivement le centre de courbure C_{c1} de la partie concave P_{c} à chacun des centres de courbures Cₓ₁, Cₓ₂, de la partie convexe Pₓ peuvent former un angle α compris entre 30 et 55°, et sont de préférence de longueur différente. La forme géométrique du pneumatique plié selon cette seconde variante de pliage ressemble sensiblement à une forme en spirale.

Enfin, selon une dernière variante de l'invention, après le pliage du pneumatique, la ligne moyenne de la tringle peut comprendre deux parties concaves P_{c1}, P_{c2} respectivement de plus petits rayons R_{c1}, R_{c2} et de centres de courbures C_{c1}, C_{c2}. Elle comprend également deux parties convexes Pₓ₁, Pₓ₂, respectivement de plus petits rayons Rₓ₁, Rₓ₂, et de centres de courbures Cₓ₁, Cₓ₂. Les droites D₁, D₂ reliant respectivement le centre de courbure C_{c1} d'une partie concave à chacun des centres de courbures Cₓ₁, Cₓ₂, des parties convexes Pₓ₁, Pₓ₂ forment de préférence un angle α, compris entre 95° et 125°, et ne sont pas de même longueur. La forme géométrique du pneumatique plié selon cette dernière variante ressemble sensiblement à un « S ».

Pour chacune des variantes, l'intervalle de valeurs de l'angle α permet à la fois de garantir que le pneumatique, pour certaines dimensions, ne risque pas de quelconque altération lorsqu'il est plié longtemps, mais également de fournir un gain significatif de compactage.

Quelque soit la forme selon laquelle il est plié, le rapport D₁/D₂ est de préférence supérieure ou égale à 1 et inférieure à 1,90 dans l'hypothèse où D₁ est supérieur à D₂ en valeur absolue. La limite supérieure de ce rapport est fonction de la dimension du pneumatique.

Lorsqu'il est plié sensiblement en forme de « U » ou de «J», le rapport D₁/D₂ peut être compris entre 1 et 1,60.

Lorsqu'il est plié sensiblement en forme de spirale, le rapport D₁/D₂ peut être compris entre 1,0 et 1,80, préférentiellement supérieur à 1,30.

Lorsqu'il est plié sensiblement en forme de « S », le rapport D₁/D₂ peut être compris entre 1,20 et 1,90, préférentiellement supérieur à 1,35.

Le pneumatique selon l'invention occupe de préférence après pliage, un volume inférieur à 65% par m³ par rapport au mode de conditionnement par chaînage.

L'invention va maintenant être illustrée à l'aide des différents modes de réalisation détaillés qui suivent et qui ne limitent en aucune manière l'objet de l'invention.

Les différentes mesures qui suivent ont été effectuées sur des pneumatiques, pliés selon l'invention, ayant des dimensions différentes.
- la figure 1 représente une vue schématique en coupe selon un plan radial, d'un demi pneumatique non plié,
- la figure 2 représente une vue schématique en coupe, selon un plan circonférentiel, du pneumatique plié de l'invention, selon un premier mode de réalisation,
- la figure 3 représente une vue schématique en coupe, selon un plan circonférentiel, du pneumatique plié de l'invention, selon un second mode de réalisation,
- la figure 4 représente une vue schématique en coupe, selon un plan circonférentiel, du pneumatique plié de l'invention, selon un troisième mode de réalisation,
- les figures 5A et 5B représentent une vue schématique en trois dimensions, des différentes étapes d'une première méthode de pliage, et
- les figures 6A et 6B représentent une vue schématique en trois dimensions, des différentes étapes d'une seconde méthode de pliage.

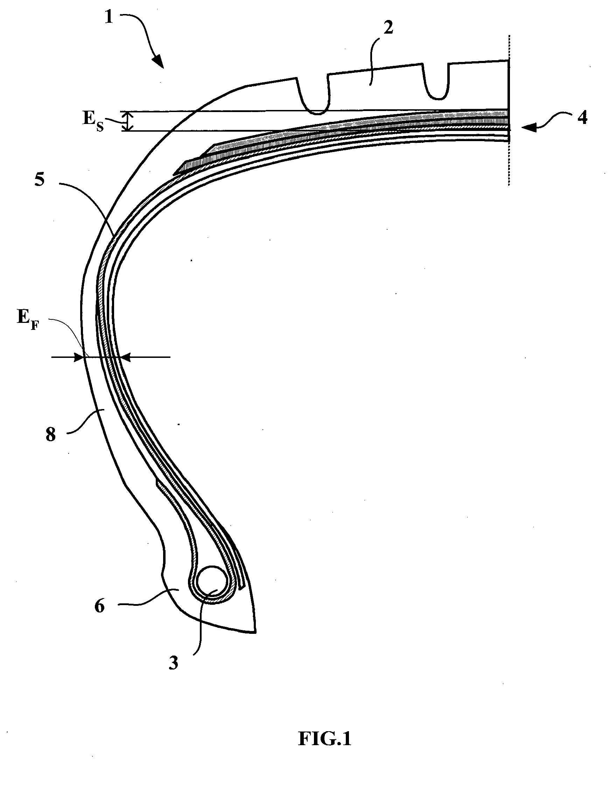

La figure 1 représente un pneumatique de véhicule de tourisme, de référence générale 1, non plié comprenant une bande de roulement 2 qui se prolonge radialement vers l'intérieur par deux flancs 8 reliés à deux bourrelets 6, lesdits bourrelets comprenant une tringle 3 (élément de renforcement) (non représenté).

Sur la figure 1, est représentée, le plus radialement à l'extérieur une bande de roulement 2. Radialement à l'intérieur de ladite bande de roulement 2 se trouvent successivement une armature de sommet inextensible 4 et une armature de carcasse 5.

Lesdites armatures de sommet 4 et de carcasse 5 sont, chacune, constituées d'au moins une couche d'éléments de renforcement (non représenté). La bande de roulement 2 est reliée à deux bourrelets 6 par l'intermédiaire de deux flancs 8. Chaque bourrelet 6 comporte au moins une tringle 3. Cette tringle 3, qui définit une ligne moyenne formant une courbe fermée sensiblement circulaire dans un plan circonférentiel, est inextensible et flexible.

La tringle est de préférence constituée en acier, et se présente sous la forme d'un câble saturé et non fretté, formé de filaments ; lesdits filaments étant d'un diamètre égale à 0,18 mm. Le câble est un câble métallique 19.18 de formule 1+6+12, les couches étant formées avec le même sens de rotation et avec des pas identiques égaux à 10 mm. Un tel câble autorise la formation d'une tringle par un enroulement de 3 à 16 tours. Le nombre de tours nécessaires est fonction de la dimension du pneumatique et de son usage.

L'épaisseur moyenne E_{F} du flanc du pneumatique selon l'invention, mesurée, au point situé au milieu selon la direction radiale entre le point haut de la tringle et le point bas du pneumatique sur le plan équatorial, est comprise entre 2,6 et 7 mm.

L'épaisseur moyenne Eₛ de l'armature de sommet 4, mesurée au plan équatorial, est comprise entre 2 et 7 mm.

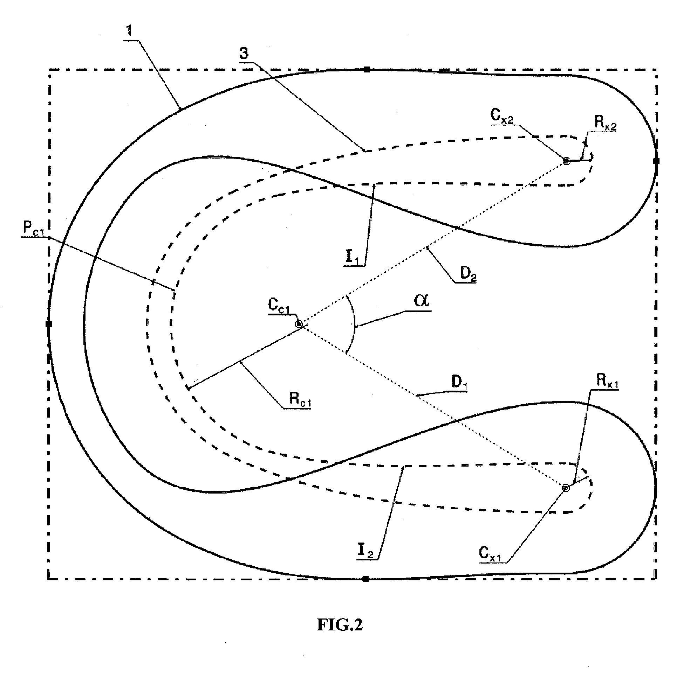

Sur la figure 2, la ligne moyenne de la tringle 3 (représentée en pointillés) du pneumatique, de référence commerciale 185/65 R 14, plié selon un premier mode de pliage, sensiblement en forme de « U », présente une partie concave P_{c1}, de plus petit rayon R_{c1} égale à 69 mm et un centre de courbure C_{c1}.

La ligne moyenne de la tringle 3 comprend, d'une part, deux points d'inflexion I₁, I₂ qui délimitent la partie concave P_{c1}, et, d'autre part, deux parties convexes Pₓ₁, Pₓ₂ ayant deux plus petits rayons Rₓ₁ égale à 18 mm et Rₓ₂ égale à 18 mm et deux centres de courbures Cₓ₁ et Cₓ₂.

Deux droites D₁ et D₂, qui relient respectivement le centre de courbure C_{c1} de la partie concave P_{c1} à chacun des centres de courbures Cₓ₁ et Cₓ₂ de la partie convexe Pₓ₁, forment un angle α d'environ 52°. Les droites D₁ et D₂ sont, selon ce mode de pliage, sensiblement de même longueur, et mesurent 170 mm.

Dans une autre variante de ce même mode de pliage selon la figure 2 du pneumatique de même référence que précédemment, les deux droites D₁ et D₂, qui relient respectivement le centre de courbure C_{c1} de la partie concave P_{c1} à chacun des centres de courbures Cₓ₁, Cₓ₂ de la partie convexe Pₓ₁, ont des longueurs différentes. D₁ est égale à 197 mm, D₂ est égale à 135 mm ; le rapport D₁/D₂ est égal à 1,45 et l'angle α est égal à 65°.

Après avoir été pliés selon ce premier mode de pliage, les pneumatiques peuvent en outre être emboîtés les uns dans les autres, voire éventuellement chaînés. Le chaînage permet de maintenir leur compression.

Le tableau I suivant rassemble d'autres mesures effectuées sur la forme de pliage représentée sur la figure 2.

**Tableau I**

| **Dimensions du pneumatique** | **Epaisseur du flanc (en mm) E_{F}** | **Epaisseur de l'armature sommet (en mm) E_{S}** | **Angle α (en degré)** | **D₁ (en mm)** | **D₂ (en mm)** | **R_{c1} (en mm)** | **Rₓ₁ (en mm)** | **Rₓ₂ (en mm)** | **D₁/D₂** |
|---|---|---|---|---|---|---|---|---|---|
| 175/70 R 13 | 3,7 | 3,2 | 51 | 138 | 138 | 77 | 16 | 16 | 1 |
| 185/65 R 14 | 4,5 | 2,7 | 61 | 170 | 170 | 68 | 18 | 18 | 1 |
| 185/65 R 14 | 4,5 | 2,7 | 65 | 197 | 135 | 69 | 17 | 17 | 1,45 |
| 195/65 R 15 | 4,8 | 3,7 | 124 | 156 | 156 | 111 | 30 | 30 | 1 |
| 205/55 R 16 | 5 | 3.7 | 55 | 168 | 168 | 78 | 18 | 18 | 1 |
| 225/55 R 17 | 5 | 3.2 | 45 | 189 | 189 | 96 | 16 | 16 | 1 |

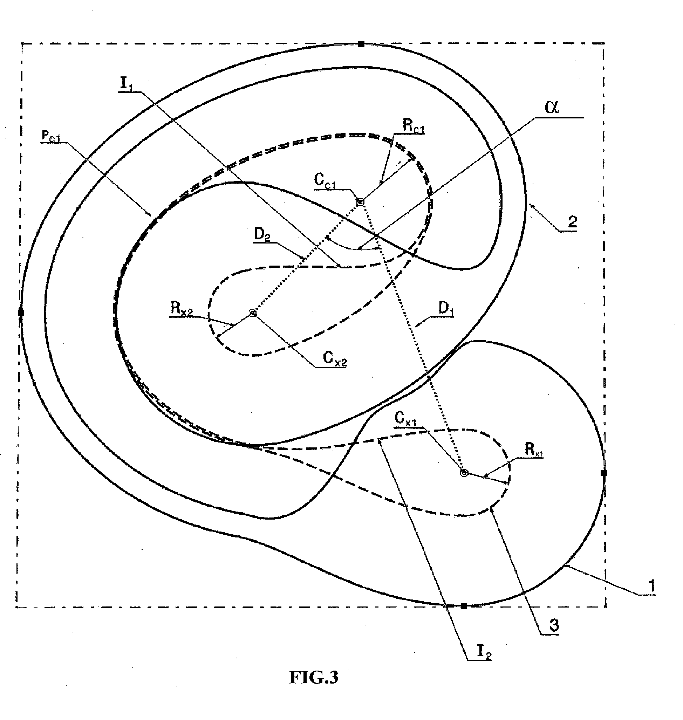

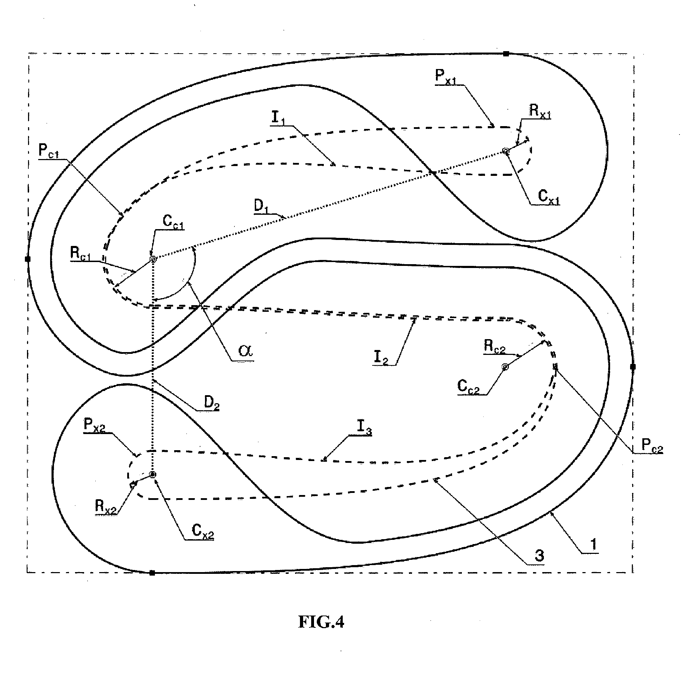

Le pliage du pneumatique 1, tel que représenté sur la figure 3, diffère de celui de la figure 2 en ce que les droites D₁ et D₂ forment un angle α compris entre 38° et 57°, et en ce qu'elles n'ont pas la même longueur. Le pliage telle que représenté selon la figure 4 ressemble sensiblement à la forme d'une spirale.

Le volume qu'occupe le pneumatique est inférieur à 85%, de préférence inférieur à 75% par rapport au volume occupé par les pneumatiques pliés selon des modes de conditionnement actuellement connus.

Le tableau II suivant rassemble les mesures effectuées sur différents pneumatiques selon la forme de pliage représentée sur la figure 3.

**Tableau II**

| **Dimensions du pneumatique** | **Epaisseur du flanc (en mm) E_{F}** | **Epaisseur de l'armature sommet (en mm) E_{S}** | **Angle α (en degré)** | **D₁ (en mm)** | **D₂ (en mm)** | **R_{c1} (en mm)** | **Rₓ₁ (en mm)** | **Rₓ₂ (en mm)** | **D₁/D₂** |
|---|---|---|---|---|---|---|---|---|---|
| 175/70 R13 | 3,7 | 3,2 | 42 | 125 | 83 | 29 | 19 | 19 | 1,50 |
| 185/65/ R14 | 4,5 | 2,7 | 38 | 135 | 83 | 25 | 15 | 15 | 1,63 |
| 195/65 R15 | 4,5 | 2,7 | 42 | 136 | 93 | 26 | 16 | 16 | 1,46 |
| 205/55 R16 | 4,8 | 3,7 | 37 | 154 | 94 | 27 | 17 | 17 | 1,64 |
| 225/55 R17 | 5 | 3,7 | 46 | 149 | 110 | 24 | 14 | 14 | 1,35 |

Le troisième mode de pliage du pneumatique 1, tel que représenté sur la figure 4, diffère de celui de la figure 2 en ce que la ligne moyenne de la tringle 3 comprend deux parties concaves P_{c1}, P_{c2}. Les parties concaves P_{c1} et P_{c2} se caractérisent par un plus petit rayon.

La ligne moyenne de la tringle 3 comprend également deux parties convexes Pₓ₁, Pₓ₂ ayant respectivement un plus petit rayon Rₓ₁ égale à 11 mm, et Rₓ₂ égale à 11 mm, et respectivement un centre de courbure Cₓ₁, Cₓ₂.

Sur la figure 4, la ligne moyenne de la tringle 3 comprend trois points d'inflexion I₁, I₂ et I₃ qui délimitent une partie concave d'une partie convexe et inversement.

Selon ce troisième mode de pliage, les droites D₁ et D₂, qui relient respectivement le centre de courbure C_{c1} d'une partie concave P_{c1} à chacun des centres de courbures Cₓ₁, Cₓ₂ des parties convexes Pₓ₁ et Pₓ₂, forment un angle α compris entre 95° et 125°. Les droites D₁ et D₂ ne sont pas de même longueur.

Le volume qu'occupe le pneumatique est inférieur à 80%, préférentiellement inférieur à 70% par rapport au volume occupé par les pneumatiques pliés selon des modes de compactage actuellement connus.

Le tableau III suivant rassemble les mesures effectuées sur différents pneumatiques selon la forme de pliage représentée sur la figure 4.

**Tableau III**

| **Dimensions du pneumatique** | **Epaisseur du flanc (en mm) E_{F}** | **Epaisseur de l'armature sommet (en mm) E**_{S} | **Angle α (en degré)** | **D₁ (en mm)** | **D₂ (en mm)** | **R_{c1} (en mm)** | **Rₓ₁ (en mm)** | **Rₓ₂ (en mm)** | **D₁/D₂** |
|---|---|---|---|---|---|---|---|---|---|
| 175/70 R13 | 3,7 | 3,2 | 112 | 122 | 92 | 20 | 10 | 10 | 1,33 |
| 185/65/R14 | 4,5 | 2,7 | 111 | 132 | 96 | 21 | 11 | 11 | 1,37 |
| 195/65 R15 | 4,5 | 2,7 | 112 | 136 | 103 | 25 | 15 | 15 | 1,32 |
| 205/55 R16 | 4,8 | 3,7 | 106 | 159 | 89 | 22 | 12 | 12 | 1,78 |
| 225/55 R17 | 5 | 3,7 | 112 | 153 | 112 | 22 | 12 | 12 | 1,36 |

Pour obtenir un pneumatique plié selon l'invention, deux méthodes de pliage peuvent être envisagées.

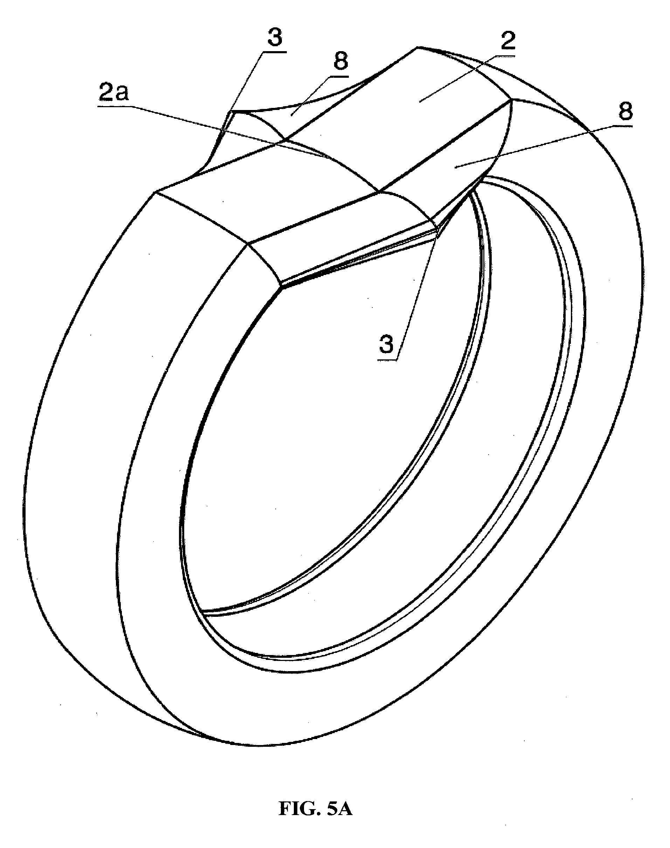

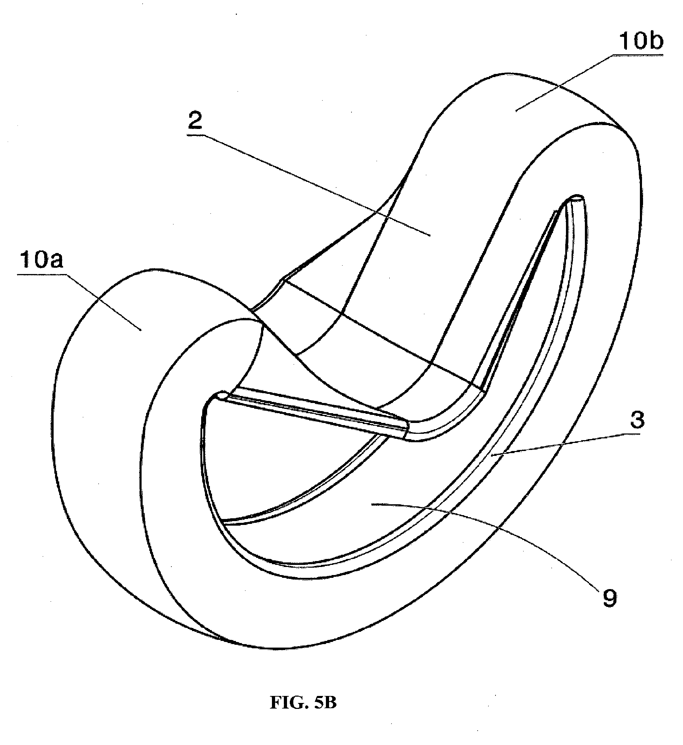

La première méthode de pliage aboutit au pneumatique plié selon l'invention schématisé sur les figures 2 et 3. Cette méthode est schématisée par les figures 5A et 5B. Comme le montre la figure 5A, cette méthode consiste, dans un plan radial, à écarter les bourrelets 6 vers un axe tangent au centre 2a de la bande de roulement 2 dans ledit plan radial.

La figure 5B montre que, selon une direction radiale, une force est appliquée, simultanément et/ou après l'étape d'écartement, sur ladite bande de roulement 2 de manière à rapprocher cette dernière de la cavité 9 opposée. On obtient alors, dans un plan circonférentiel, un pneumatique plié sensiblement en forme d'un demi cercle, et ressemblant sensiblement à un « U ». Cette forme en arc de cercle comprend deux axes 10a, et 10b sensiblement verticaux, qui, lorsqu'ils sont repliés indifféremment l'un sur l'autre, donnent le pliage selon la figure 3, ressemblant sensiblement à une spirale.

La seconde méthode de pliage du pneumatique aboutit au pneumatique plié, selon l'invention, schématisé sur la figure 4.

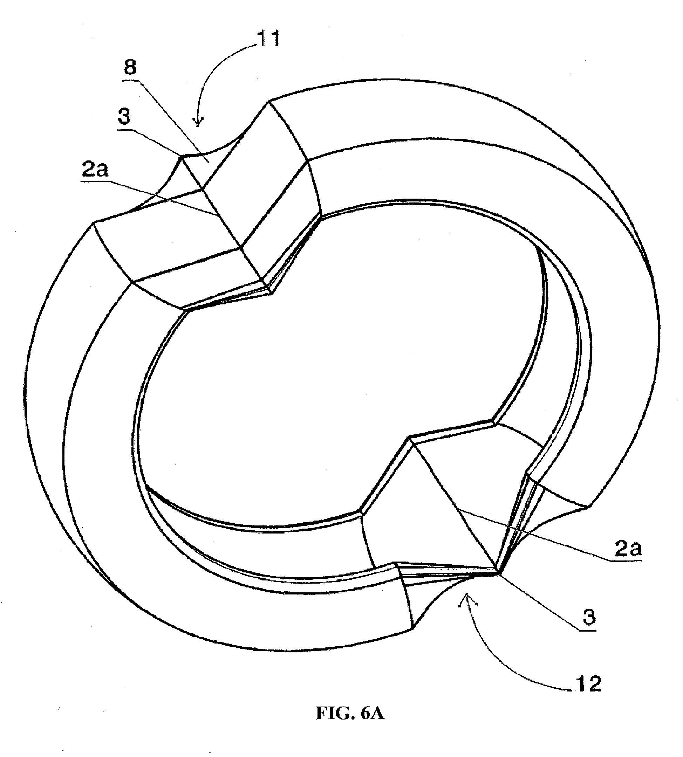

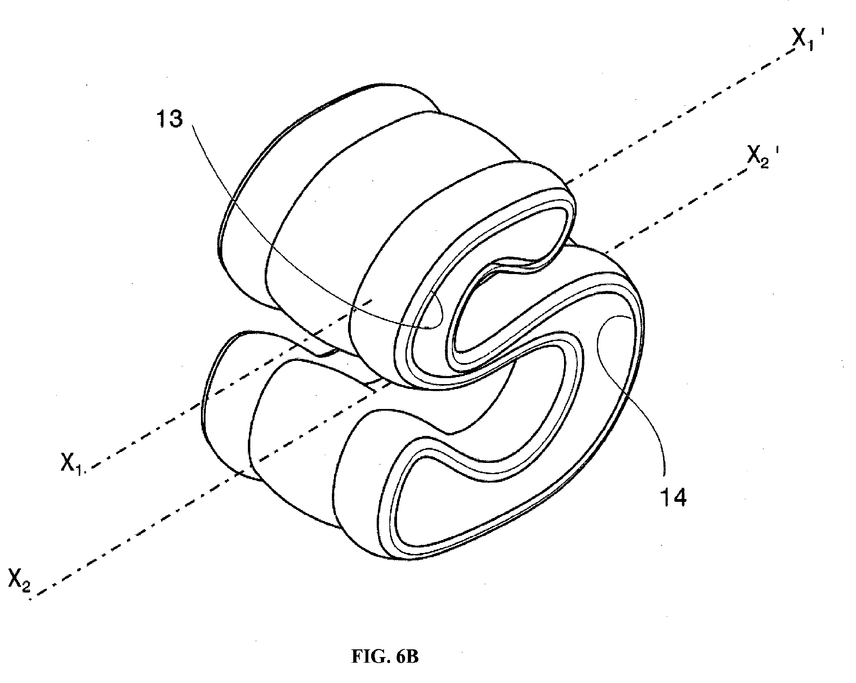

Cette méthode est schématisée par les figures 6A et 6B. Selon cette seconde méthode de pliage, et comme le montre la figure 6A, on écarte, dans un plan radial, les bourrelets 6 d'une première partie 11 du pneumatique selon une direction axiale vers un axe tangent au centre 2a de la bande de roulement 2.

Une force de compression est appliquée selon une direction radiale sur ladite bande de roulement 2 de la première partie 11. Ladite force peut être appliquée simultanément et/ou après l'écartement des bourrelets 6.

Comme le montre la figure 6B, on applique, de manière simultanée ou non, une première force de compression F₁ selon une première direction circonférentielle XX^{1'} sur la bande de roulement 2, de manière à la rapprocher de la cavité 13 opposée.

Une seconde force F₂ est appliquée selon une seconde direction circonférentielle, parallèle à la première force F₁, de manière à la rapprocher de la cavité 14. Les forces F₁ et F₂ sont de sens opposé.

La force de compression exercée selon la direction radiale peut être appliquée simultanément ou non à la seconde force F₂.

Le pneumatique plié selon ce mode de pliage a sensiblement la forme d'un «S».

## Revendications

1. Pneumatique pliable pour véhicule comportant au moins une armature de carcasse (5) associée à une armature de sommet (4) inextensible, elle-même radialement à l'intérieur d'une bande de roulement (2), lesdites armatures (4, 5) étant chacune constituées d'au moins une couche d'éléments de renforcement, ladite bande de roulement (2) étant reliée à deux bourrelets (6) par l'intermédiaire de deux flancs (8), lesdits bourrelets (6) étant destinés à entrer en contact avec une jante, chaque bourrelet (6) comportant au moins un élément de renforcement circonférentiel (3) inextensible, appelé tringle, ladite tringle (3) définissant, à un état libre de toute contrainte, une ligne moyenne formant une courbe fermée sensiblement circulaire dans un plan circonférentiel, lesdits flancs (8) présentant une épaisseur comprise entre 2,6 et 7 mm et ladite armature de sommet présentant une épaisseur comprise entre 2 et 7 mm, **caractérisé en ce que** la tringle (3) de chaque bourrelet (6) est flexible, **et en ce qu'**après pliage du pneumatique, la ligne moyenne de la tringle (3) comprend au moins une partie concave P_{c} de plus petit rayon R_{c} et de centre de courbure C_{c}.

2. Pneumatique selon la revendication 1, **caractérisé en ce que** la ligne moyenne de la tringle comprend en outre au moins deux points d'inflexion I₁, I₂ délimitant la partie concave P_{c}.

3. Pneumatique selon l'une des revendications 1 ou 2, **caractérisé en ce que** la ligne moyenne de la tringle (3) comprend en outre au moins deux parties convexes Pₓ₁, Pₓ₂ ayant deux plus petits rayons Rₓ₁, Rₓ₂ et deux centres de courbure Cₓ₁, Cₓ₂, **et en ce que** des droites D₁, D₂ reliant respectivement le centre de courbure C₁ de la partie concave P_{c} à chacun des centres de courbures Cₓ₁, Cₓ₂ des parties convexes Pₓ₁, Pₓ₂, forment un angle α compris entre 30° et 125°.

4. Pneumatique selon l'une des revendication 1 à 3, **caractérisé en ce que** la ligne moyenne de la tringle (3) de chaque bourrelet (6) est formée par enroulement d'un câble métallique, formé de filaments, saturé et non fretté, **en ce que** le diamètre du câble est inférieur à 1,5mm **et en ce que** le diamètre du filament est inférieur à 0,25mm.

5. Pneumatique selon l'une des revendications 1 à 4, **caractérisé en ce qu'**après son pliage, la ligne moyenne de la tringle (3) comprend une partie concave P_{c} de plus petit rayon R_{c1} et de centre de courbure C_{c1}, **en ce qu**'elle comprend deux parties convexes Pₓ₁, Pₓ₂, respectivement de plus petits rayons Rₓ₁, Rₓ₂, et de centres de courbures Cₓ₁, Cₓ₂, **et en ce que** les droites D₁, D₂ reliant respectivement le centre de courbure C_{c1} de la partie concave P_{c} à chacun des centres de courbures Cₓ₁, Cₓ₂, de la partie convexe Pₓ forment un angle α compris entre 40 et 140°.

6. Pneumatique selon l'une des revendications 1 à 3, **caractérisé en ce qu**'après son pliage, la ligne moyenne de la tringle (3) comprend une partie concave P_{c} de plus petit rayon R_{c1} et de centre de courbure C_{c1}, **en ce qu**'elle comprend deux parties convexes Pₓ₁, Pₓ₂, respectivement de plus petits rayons Rₓ₁, Rₓ₂, et de centres de courbures Cₓ₁, Cₓ₂, **en ce que** les droites D₁, D₂ reliant respectivement le centre de courbure C_{c} de la partie concave P_{c} à chacun des centres de courbures Cₓ₁, Cₓ₂, de la partie convexe Pₓ forment un angle α compris entre 30 et 55°.

7. Pneumatique selon l'une des revendications 1 à 3, **caractérisé en ce qu**'après son pliage, la ligne moyenne de la tringle (3) comprend deux parties concaves P_{c1}, P_{c2} respectivement de plus petits rayons R_{c1}, R_{c2} et de centres de courbures C_{c1}, C_{c2}, **en ce qu**'elle comprend deux parties convexes Pₓ₁, Pₓ₂, respectivement de plus petits rayons Rₓ₁, Rₓ₂, et de centres de courbures Cₓ₁, Cₓ₂, **en ce que** les droites D₁, D₂ reliant respectivement le centre de courbure C_{c1} d'une partie concave à chacun des centres de courbures Cₓ₁, Cₓ₂, des parties convexes Pₓ₁, Pₓ₂ forment un angle α compris entre 95° et 125°.

8. Pneumatique selon l'une des revendications 1 à 7, **caractérisé en ce qu**'après pliage, le rapport D₁/D₂ est supérieur ou égal à 1 et inférieur à 1,9.

9. Pneumatique selon l'une des revendications 1 à 7, **caractérisé en ce qu**'après pliage, il occupe un volume inférieur à 65% par m³ par rapport au mode de conditionnement par chaînage.

10. Procédé pour plier un pneumatique selon l'une des revendications précédentes, **caractérisé en ce qu**'il consiste à :
- écarter, dans un plan radial, les bourrelets d'une partie du pneumatique selon une direction axiale vers un axe tangent au centre de la bande de roulement de ladite partie du pneumatique dans ledit plan radial,
- à appliquer une force selon une direction radiale sur ladite bande de roulement de manière à la rapprocher de la cavité opposée formant ainsi, dans un plan circonférentiel, un pneumatique plié sensiblement en forme d'arc de cercle comprenant une base reliée à deux axes.

11. Procédé selon la revendication 10, **caractérisé en ce qu'**il consiste, dans le plan circonférentiel, à replier les deux axes indifféremment l'un sur l'autre.

12. Procédé pour plier un pneumatique selon l'une des revendications 1 à 9, **caractérisé en ce qu**'il consiste à :
- écarter, dans un plan radial, les bourrelets d'une première partie du pneumatique selon une direction axiale vers un axe tangent au centre de la bande de roulement, et à appliquer une force de compression selon la direction radiale sur ladite bande de roulement, ladite force pouvant être appliquée simultanément et/ou après l'écartement des bourrelets,
- à appliquer une première force F₁ selon une première direction circonférentielle sur ladite bande de roulement de manière à rapprocher la cavité correspondante d'une autre partie de cavité du pneumatique,
- à écarter, dans un plan radial, les bourrelets d'une seconde partie du pneumatique selon une direction axiale vers un axe tangent au centre de la bande de roulement,
- à appliquer, de manière simultanée ou non, la force de compression selon la direction radiale sur ladite première et/ou seconde partie, et une seconde force F₂ selon une seconde direction circonférentielle, de sens opposée à ladite première force F₁ sur ladite bande de roulement de manière à rapprocher la cavité correspondante d'une autre partie de cavité du pneumatique.

13. Utilisation du pneumatique selon l'une des revendications 1 à 9 pour véhicule de tourisme.

## Patentansprüche

1. Zusammenklappbarer Reifen für ein Fahrzeug, der mindestens eine Karkassenbewehrung (5) umfasst, die mit einer Scheitelbewehrung (4), die nicht dehnbar ist, assoziiert ist, die selbst radial im Inneren einer Laufdecke (2) liegt, wobei die Bewehrungen (4, 5) jeweils aus mindestens einer Schicht von Verstärkungselementen bestehen, wobei die Laufdecke (2) mit zwei Wülsten (6) durch zwei Flanken (8) verbunden ist, wobei die Wülste (6) dazu bestimmt sind, mit einer Felge in Berührung zu treten, wobei jeder Wulst (6) mindestens ein umfängliches Verstärkungselement (3), das nicht dehnbar ist, Reifendraht genannt, umfasst, wobei der Reifendraht (3) bei einem von jeder Spannung freien Zustand eine Mittenlinie definiert, die eine in einer Umfangsebene im Wesentlichen kreisförmige geschlossene Krümmung bildet, wobei die Flanken (8) eine Stärke zwischen 2,6 und 7 mm aufweisen und die Scheitelbewehrung eine Stärke zwischen 2 und 7 mm aufweist, **dadurch gekennzeichnet, dass** der Reifendraht (3) jedes Wulstes (6) biegsam ist, und dass die Mittenlinie des Reifendrahts (3) nach dem Zusammenklappen des Reifens mindestens einen konkaven Teil P_{c} mit kleinerem Radius R_{c} und Krümmungsmitte C_{c} umfasst.

2. Reifen nach Anspruch 1, **dadurch gekennzeichnet, dass** die Mittenlinie des Reifendrahts außerdem mindestens zwei Biegestellen I₁, I₂, die den konkaven Teil P_{c} abgrenzen, umfasst.

3. Reifen nach einem der Ansprüche 1 oder 2, **dadurch gekennzeichnet, dass** die Mittenlinie des Reifendrahts (3) außerdem mindestens zwei konvexe Teile Pₓ₁, Pₓ₂ aufweist, die zwei kleinere Radien Rₓ₁, Rₓ₂ und zwei Krümmungsmitten Cₓ₁, Cₓ₂ haben, und dass die Geraden D₁, D₂, die jeweils die Krümmungsmitte C₁ des konkaven Teils P_{c} mit jeder der Krümmungsmitten Cₓ₁, Cₓ₂ der konvexen Teile Pₓ₁, Pₓ₂ verbinden, einen Winkel α zwischen 30° und 125° bilden.

4. Reifen nach einem der Ansprüche 1 bis 3, **dadurch gekennzeichnet, dass** die Mittenlinie des Reifendrahts (3) jedes Wulstes (6) durch Aufwickeln eines Metallkabels, das aus Filamenten, die gesättigt und unbewehrt sind, gebildet ist, und dass der Durchmesser des Kabels kleiner ist als 1,5 mm, und dass der Durchmesser des Filaments kleiner ist als 0,25 mm.

5. Reifen nach einem der Ansprüche 1 bis 4, **dadurch gekennzeichnet, dass** die Mittenlinie des Reifendrahts (3) nach ihrem Zusammenklappen einen konkaven Teil P_{c} umfasst, der einen kleineren Radius R_{c1} und die Krümmungsmitte C_{c1} hat, und dass sie zwei konvexe Teile Pₓ₁, Pₓ₂ jeweils mit kleineren Radien Rₓ₁, Rₓ₂ und Krümmungsmitten Cₓ₁, Cₓ₂ umfasst, und dass die Geraden D₁, D₂, die jeweils die Krümmungsmitte C_{c1} des konkaven Teils P_{c} mit jeder der Krümmungsmitten Cₓ₁, Cₓ₂ des konvexen Teils Pₓ verbinden, einen Winkel α zwischen 40 und 140° bilden.

6. Reifen nach einem der Ansprüche 1 bis 3, **dadurch gekennzeichnet, dass** die Mittenlinie des Reifendrahts (3) nach ihrem Zusammenklappen einen konkaven Teil P_{c} mit kleinerem Radius R_{c1} und Krümmungsmitte C_{c1} umfasst, und dass sie zwei konvexe Teile Pₓ₁, Pₓ₂ jeweils mit kleineren Radien Rₓ₁, Rₓ₂ und Krümmungsmitten Cₓ₁, Cₓ₂ umfasst, dass die Geraden D₁, D₂, die jeweils die Krümmungsmitte C_{c} des konkaven Teils P_{c} mit jeder der Krümmungsmitten Cₓ₁, Cₓ₂ des konvexen Teils Pₓ verbinden, einen Winkel α zwischen 30 und 55° bilden.

7. Reifen nach einem der Ansprüche 1 bis 3, **dadurch gekennzeichnet, dass** die Mittenlinie des Reifendrahts (3) nach ihrem Zusammenklappen zwei konkave Teile P_{c1}, P_{c2} jeweils mit kleineren Radien R_{c1}, R_{c2} und Krümmungsmitten C_{c1}, C_{c2} umfasst, und dass sie zwei konvexe Teile Pₓ₁, Pₓ₂ jeweils mit kleineren Radien Rₓ₁, Rₓ₂ und Krümmungsmitten Cx₁, Cₓ₂ umfasst, dass die Geraden D₁, D₂, die jeweils die Krümmungsmitte C_{c1} eines konkaven Teils mit jeder der Krümmungsmitten Cₓ₁, Cₓ₂ der konvexen Teile Pₓ₁, Pₓ₂ verbinden, einen Winkel α zwischen 95° und 125° bilden.

8. Reifen nach einem der Ansprüche 1 bis 7, **dadurch gekennzeichnet, dass** das Verhältnis D₁/D₂ nach dem Zusammenklappen größer oder gleich 1 und kleiner als 1,9 ist.

9. Reifen nach einem der Ansprüche 1 bis 7, **dadurch gekennzeichnet, dass** er nach dem Zusammenklappen ein Volumen belegt, das um 65 % pro m³ im Vergleich zu der Aufmachungsart durch Verketten kleiner ist.

10. Verfahren zum Zusammenklappen eines Reifens nach einem der vorhergehenden Ansprüche, **dadurch gekennzeichnet, dass** es aus Folgendem besteht:
- in einer radialen Ebene Abspreizen der Wülste eines Teils des Reifens gemäß einer axialen Richtung zu einer die Mitte der Reifendecke des Teils des Reifens in der Mittenebene tangierenden Achse,
- Anlegen einer Kraft entlang einer radialen Richtung auf der Laufdecke derart, dass sie dem gegenüberliegenden Hohlraum angenähert wird, indem daher in einer Umfangsebene ein zusammengeklappter Reifen im Wesentlichen in Kreisbogenform gebildet wird, der eine Basis umfasst, die mit zwei Achsen verbunden ist.

11. Verfahren nach Anspruch 10, **dadurch gekennzeichnet, dass** es darin besteht, in der Umfangsebene die zwei Achsen unterschiedslos aufeinander zurückzuklappen.

12. Verfahren zum Zusammenklappen eines Reifens nach einem der Ansprüche 1 bis 9, **dadurch gekennzeichnet, dass** es aus Folgendem besteht:
- in einer radialen Ebene Abspreizen der Wülste eines ersten Teils des Reifens gemäß einer axialen Richtung zu einer die Mitte der Reifendecke tangierenden Achse und Anlegen einer Kompressionskraft entlang der radialen Richtung auf der Laufdecke, wobei die Kraft gleichzeitig und/oder nach dem Abspreizen der Wülste angelegt werden kann,
- Anlegen einer ersten Kraft F₁ entlang einer ersten Umfangsrichtung auf der Laufdecke derart, dass der entsprechende Hohlraum einem anderen Teil des Hohlraums des Reifens genähert wird,
- in einer radialen Ebene Abspreizen der Wülste eines zweiten Teils des Reifens entlang einer Richtung axial zu einer Achse, die die Mitte der Laufdecke tangiert,
- gleichzeitig oder nicht Anlegen der Kompressionskraft entlang der radialen Richtung auf dem ersten und/oder zweiten Teil, und einer zweiten Kraft F₂ entlang einer zweiten Umfangsrichtung mit entgegengesetzter Richtung zu der ersten Kraft F₁ auf der Laufdecke derart, dass der entsprechende Hohlraum einem anderen Teil des Hohlraums des Reifens angenähert wird.

13. Verwenden des Reifens nach einem der Ansprüche 1 bis 9 für ein Personenkraftfahrzeug.

## Claims

1. Collapsible tyre for a vehicle, comprising at least one carcass reinforcement (5) associated with an inextensible crown reinforcement (4), itself radially on the inside of a tread (2), the said reinforcements (4, 5) each consisting of at least one layer of reinforcing elements, the said tread (2) being connected to two beads (6) by two sidewalls (8), the said beads (6) being intended to come into contact with a rim, each bead (6) comprising at least one inextensible circumferential reinforcing element (3) called a bead wire, the said bead wire (3) defining, when free of any stress, a mean line forming a substantially circular closed curve in a circumferential plane, the said sidewalls (8) having a thickness comprised between 2.6 and 7 mm and the said crown reinforcement having a thickness comprised between 2 and 7 mm, **characterized in that** the bead wire (3) of each bead (6) is flexible, **and in that** after the tyre has been collapsed, the mean line of the bead wire (3) comprises at least one concave part P_{c} of smaller radius R_{c} and of centre of curvature C_{c}.

2. Tyre according to Claim 1, **characterized in that** the mean line of the bead wire further comprises at least two points of inflexion I₁, I₂ delimiting the concave part P_{c}.

3. Tyre according to one of Claims 1 and 2, **characterized in that** the mean line of the bead wire (3) further comprises at least two convex parts Pₓ₁, Pₓ₂ having two smaller radii Rₓ₁, Rₓ₂ and two centres of curvature Cₓ₁, Cₓ₂, **and in that** straight lines D₁, D₂ respectively connecting the centre of curvature C₁ of the concave part P_{c} to each of the centres of curvature Cₓ₁, Cₓ₂ of the convex parts Pₓ₁, Pₓ₂ form an angle α comprised between 30° and 125°.

4. Tyre according to one of Claims 1 to 3, **characterized in that** the mean line of the bead wire (3) of each bead (6) is formed by winding a metal cord, formed of filaments, which is saturated and unwrapped, **in that** the diameter of the cord is less than 1.5 mm **and in that** the diameter of the filament is less than 0.25 mm.

5. Tyre according to one of Claims 1 to 4, **characterized in that** after it has been collapsed, the mean line of the bead wire (3) comprises a concave part P_{c} of smaller radius R_{c1} and of centre of curvature C_{c1}, **in that** it comprises two convex parts Pₓ₁, Pₓ₂, respectively of smaller radii Rₓ₁, Rₓ₂, and of centres of curvature Cₓ₁, Cₓ₂, **and in that** the straight lines D₁, D₂ respectively connecting the centre of curvature C_{c1} of the concave part P_{c} to each of the centres of curvature Cₓ₁, Cₓ₂ of the convex part Pₓ form an angle α comprised between 40 and 140°.

6. Tyre according to one of Claims 1 to 3, **characterized in that** after it has been collapsed, the mean line of the bead wire (3) comprises a concave part P_{c} of smaller radius R_{c1} and of centre of curvature C_{c1}, **in that** it comprises two convex parts Pₓ₁, Pₓ₂ respectively of smaller radii Rₓ₁, Rₓ₂, and of centres of curvature Cₓ₁, Cₓ₂, **and in that** the straight lines D₁, D₂ respectively connecting the centre of curvature C_{c} of the concave part P_{c} to each of the centres of curvature Cₓ₁, Cₓ₂ of the convex part Pₓ form an angle α comprised between 30 and 55°.

7. Tyre according to one of Claims 1 to 3, **characterized in that** after it has been collapsed, the mean line of the bead wire (3) comprises two concave parts P_{c1}, P_{c2}, respectively of smaller radii R_{c1}, R_{c2} and of centres of curvature C_{c1}, C_{c2}, **in that** it comprises two convex parts Pₓ₁, Pₓ₂, respectively of smaller radii R_{x1,} Rₓ₂, and of centres of curvature Cₓ₁, Cₓ₂, **and in that** the straight lines D₁, D₂ respectively connecting the centre of curvature C_{c1} of a concave part to each of the centres of curvature Cₓ₁, Cₓ₂ of the convex parts Pₓ₁, Pₓ₂ form an angle α comprised between 95° and 125°.

8. Tyre according to one of Claims 1 to 7, **characterized in that** after collapsing, the ratio D₁/D₂ is greater than or equal to 1 and less than 1.9.

9. Tyre according to one of Claims 1 to 7, **characterized in that** after collapsing, it occupies a volume less than 65% per m³ by comparison with the lacing mode of packaging.

10. Method for collapsing a tyre according to one of the preceding claims, **characterized in that** it consists in:
- parting, in a radial plane, the beads of a part of the tyre along an axial direction towards an axis tangential to the centre of the tread of the said part of the tyre in the said radial plane,
- applying a force in a radial direction to the said tread so as to move it closer to the cavity opposite thus forming, in a circumferential plane, a tyre that is collapsed substantially into the shape of an arc of a circle comprising a base that is connected with two axes.

11. Method according to Claim 10, **characterized in that** it consists, in the circumferential plane, in folding the two axes one onto the other indiscriminately.

12. Method for collapsing a tyre according to one of Claims 1 to 9, **characterized in that** it consists:
- in parting, in a radial plane, the beads of a first part of the tyre along an axial direction towards an axis tangential to the centre of the tread and in applying a compression force in the radial direction to the said tread, it being possible for the said force to be applied at the same time as the beads are being parted and/or afterwards,
- in applying a first force F₁ in a first circumferential direction to the said tread so as to move the corresponding cavity closer to another part of the cavity of the tyre,
- in parting, in a radial plane, the beads of a second part of the tyre in an axial direction towards an axis tangential to the centre of the tread,
- in applying, either simultaneously or not, the compression force in the radial direction to the said first and/or second part, and a second force F₂ in a second circumferential direction, of opposite sense to the said first force F₁ to the said tread so as to move the corresponding cavity closer to another part of the cavity of the tyre.

13. Use of the tyre according to one of Claims 1 to 9 for a passenger vehicle.
